# EUROPEAN PATENT APPLICATION

(11) **EP 2 587 012 A1**
(43) Date of publication of application: **01.05.2013**
(21) Application number: 10854034.5
(22) Date of filing: 28.06.2010
(51) Int. Cl.: F01N 3/36, F01N 3/20, F01N 3/24, F01N 3/26

(54) **INTERNAL COMBUSTION ENGINE**

(71) Applicant: TOYOTA JIDOSHA KABUSHIKI KAISHA, Toyota-shi, Aichi-ken, 471-8571 (JP)
(72) Inventor: MORI, Taiichi, Toyota-shi Aichi 471-8571 (JP); HASHIMOTO, Eiji, Toyota-shi Aichi 471-8571 (JP); UNO, Koki, Toyota-shi Aichi 471-8571 (JP); KANBA, Chika, Toyota-shi Aichi 471-8571 (JP); FUJIWARA, Masahiro, Toyota-shi Aichi 471-8571 (JP); HANADA, Shunichi, Toyota-shi Aichi 471-8571 (JP)
(74) Representative: Intès, Didier Gérard André
(86) International application number: PCT/JP2010/004278
(87) International publication number: WO 2012/001733

(57) **Abstract**

An internal combustion engine according to the present invention includes an exhaust treatment apparatus provided in an exhaust passage, and a burner apparatus provided upstream of the exhaust treatment apparatus to increase an exhaust temperature. The burner apparatus includes at least a fuel addition valve that allows fuel to be added into exhaust and ignition means for igniting the fuel added via the fuel addition valve. The fuel addition valve is driven open when fuel is added via the fuel addition valve. The amount of fuel added via the fuel addition valve per unit time is increased beyond a predetermined reference amount when the detected amount of intake air exceeds a predetermined threshold value. The probability of successful ignition by the ignition apparatus is increased, and a flame is prevented from being blown out. Thus, the burner apparatus can demonstrate sufficient ignition performance and sufficient combustion performance.

## Description

### Technical Field

The present invention relates to an internal combustion engine, and in particular, to an internal combustion engine including a burner apparatus provided upstream of an exhaust treatment apparatus in an exhaust passage to increase an exhaust temperature.

### Background Art

In some internal combustion engines, in an exhaust passage, a burner apparatus is provided upstream of an exhaust treatment apparatus (a catalyst or the like) so that heated gas generated by the burner apparatus is utilized to increase an exhaust temperature to heat the exhaust treatment apparatus, thus facilitating warming-up of the exhaust treatment apparatus. The burner apparatus typically allows appropriate ignition means to ignite and combust fuel added into the exhaust passage.

Patent Document 1 discloses a DPF recovery apparatus including a fuel addition injector provided in a DPF exhaust inlet passage to add fuel to exhaust gas and a ceramic glow plug also provided in the DPF exhaust inlet passage to assist in igniting the fuel supplied by the fuel addition injector. The DPF recovery apparatus supplies the fuel from the fuel addition injector and air for ignition after an increase in the temperature of the ceramic glow plug is completed.

An increase in the amount of intake air in the internal combustion engine tends to degrade the ignition performance and combustion performance of the burner apparatus. The reason is as follows.

An increased amount of intake air increases the flow rate and flow velocity of exhaust gas supplied to the burner apparatus. Then, added fuel is swept away to a downstream side before being retained around the ignition means, precluding ignition itself from being properly carried out (the internal combustion engine is brought into a misfiring state). In another case, even if the fuel is ignited, a flame may be blown out by exhaust gas immediately after the ignition, preventing the flame from being sufficiently maintained. An increased amount of intake air reduces the temperature of exhaust gas supplied to the burner apparatus, thus hindering vaporization of the added fuel. This makes the above-described problem more serious.

Thus, an object of the present invention is to provide an internal combustion engine that allows the burner apparatus to demonstrate sufficient ignition performance and sufficient combustion performance even with an increased amount of intake air.

### Citation List

### Patent Literature

Patent Document 1: Japanese Patent Laid-Open No. 2009-167950

### Summary of Invention

An aspect of the present invention provides an internal combustion engine characterized by comprising:
an exhaust treatment apparatus provided in an exhaust passage;
a burner apparatus provided upstream of the exhaust treatment apparatus to increase an exhaust temperature and comprising at least a fuel addition valve that allows fuel to be added into exhaust and ignition means for igniting the fuel added via the fuel addition valve;
detection means for detecting an amount of intake air in the internal combustion engine; and
control means for driving the fuel addition valve open when fuel is added via the fuel addition valve, the control means increasing an amount of fuel added via the fuel addition valve per unit time beyond a predetermined reference amount when the amount of intake air detected by the detection means exceeds a predetermined threshold value.

Increasing the amount of fuel added via the fuel addition valve per unit time enables an increase in the time for which the added fuel remains stagnant around the ignition means. This increases the probability of successful ignition to allow the ignition itself to be properly achieved (misfiring can be prevented or suppresses). In another case, if the ignition is achieved, the flame can be prevented or restrained from being blown out immediately after the ignition, by the additional fuel, and can thus be sufficiently maintained. The ignition and combustion are improved as described above, and thus the adverse effect of lowered exhaust gas temperature can be significantly reduced. Hence, even with an increased amount of intake air, the burner apparatus can demonstrate sufficient ignition performance and sufficient combustion performance.

Preferably, the control means intermittently drives the fuel addition valve open to intermittently add fuel via the fuel addition valve. When the amount of intake air exceeds the threshold value, the control means carries out set driving comprising a set of a plurality of valve open drive operations, and sets a drive duration for an Nth (N is an integer of at least one) valve open drive operation in the set longer than a predetermined reference duration.

Preferably, the threshold value comprises a plurality of threshold values that increase step by step, and the control means gradually increases a total drive duration for one set every time the amount of intake air increases beyond each of the plurality of threshold values.

Preferably, the control means increases the drive duration for the Nth valve open drive operation when the amount of intake air exceeds at least one of the plurality of threshold values.

Preferably, the control means increases the drive duration not only for the Nth valve open drive operation in the set but also for an Mth (M is an integer of at least one) valve open drive operation in the set which is different from the Nth valve open drive operation when the amount of intake air exceeds at least one of the plurality of threshold values.

Preferably, the control means makes the drive duration for the Nth valve open drive operation be different from the drive duration for the Mth valve open drive operation.

Preferably, the burner apparatus further comprises a pretreatment catalytic converter that oxidizes the fuel added via the fuel addition valve.

### Brief Description of Drawings

[Fig. 1] Fig. 1 is a schematic diagram of an embodiment of the present invention;
[Fig. 2] Fig. 2 is a vertical cross-sectional side view showing a burner apparatus;
[Fig. 3] Fig. 3 is a vertical cross-sectional front view showing the burner apparatus as seen from an upstream side;
[Fig. 4] Fag. 4 is a time chart showing a first example regarding control of a fuel addition valve; and
[Fig. 5] Fig. 5 is a time chart showing a first example regarding control of a fuel addition valve.

### Description of Embodiments

Preferred embodiments of the present invention will be described below in detail. However, it should be noted that the embodiments of the present invention are not limited to those described below and that the present invention includes any variations and applications embraced in the concepts of the present invention defined by the claims. The dimension, materials, shapes, relative arrangements, and the like of the components described in the embodiments are not intended to limit the technical scope of the present invention to these unless otherwise specified.

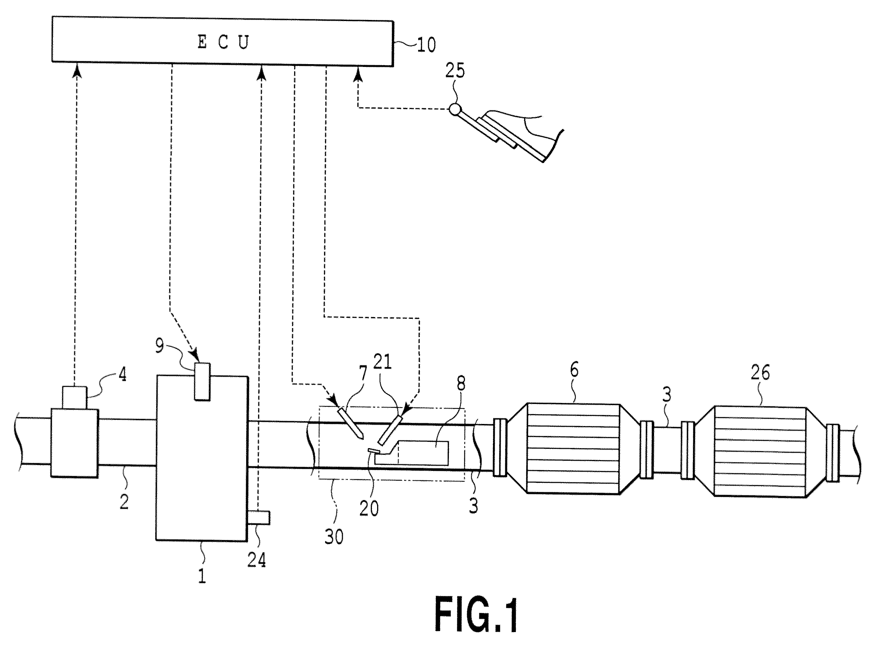

Fig. 1 shows a general configuration of an engine main body 1 and an intake and exhaust system for the engine main body 1 according to an embodiment. The engine main body 1 is a four-cycle diesel engine to be mounted on the vehicle. An intake pipe 2 (intake passage) and an exhaust pipe 3 (exhaust passage) are connected to the engine main body 1. The intake pipe 2 (intake passage) includes an airflow meter 4 provided in the longitudinal middle thereof to output a signal according to the flow rate of intake air flowing through the intake pipe 2. The airflow meter 4 detects the amount of intake air flowing into the engine main body 1 per unit time (that is, the flow rate of intake air). The engine main body 1 includes a plurality of cylinders each with an intra-cylindrical fuel injection valve 9. However, Fig. 1 shows only one intra-cylindrical fuel injection valve 9.

The exhaust pipe 3 is connected to a muffler (not shown in the drawings) at a terminal thereof and is open to the air at an outlet of the muffler. The exhaust pipe 3 includes an oxidation catalytic converter 6 and an NOx catalytic converter 26 arranged in the longitudinal middle thereof in series in this order from the upstream side.

The oxidation catalytic converter 6 allows unburned components such as HC and CO to react with O₂ to obtain CO, CO₂, H₂O, and the like. A catalytic substance may be, for example, Pt/CeO₂, Mn/CeO₂, Fe/CeO₂, Ni/CeO₂, or Cu/CeO₂.

The NOx catalytic converter 26 is preferably formed of an NOx storage reduction (NSR) catalytic converter. The NOx catalytic converter 26 has a function to store NOx when inflow exhaust has a high oxygen concentration and to reduce NOx when inflow exhaust has a reduced oxygen concentration and when a reducing component (for example, fuel) is present. The NOx catalytic converter 26 includes a base material formed of an oxide such as alumina Al₂O₃ and rare metal such as platinum Pt and an NOx absorbing component which are carried on a surface of the base material. The NOx absorbing component is formed of, for example, at least one component selected from alkali metal such as potassium K, sodium Na, lithium Li, and cesium Cs, alkali earths such as barium Ba and calcium Ca, and rare earths such as lanthanum La and yttrium Y. The NOx catalytic converter 26 may be a selective catalytic reduction (SCR) NOx converter.

In addition to the oxidation catalytic converter 6 and the NOx catalytic converter 26, a particulate filter (DPF) may be provided which collects particulates (PM) in exhaust such as soot. Preferably, the DPF is of a continuous recycling type that carries a catalyst formed of rare metal to continuously oxidize and combust collected particulates. Preferably, the DPF is provided at least downstream of the oxidation catalytic converter 6 and upstream or downstream of the NOx catalytic converter. For a spark ignition internal combustion engine, a three-way catalyst is preferably provided in the exhaust passage. The oxidation catalytic converter 6, the NOx catalytic converter 26, the DPF, and the three-way catalyst correspond to an exhaust treatment apparatus according to the present Invention.

A burner apparatus 30 is arranged upstream of the oxidation catalytic converter 6 in the exhaust pipe 3. The burner apparatus 30 includes a fuel addition valve 7 and a glow plug 21 serving as ignition means or an ignition apparatus. Furthermore, the burner apparatus 30 according to the embodiment includes a pretreatment catalytic converter 8. The burner apparatus 30 is arranged downstream of an aggregate portion of an exhaust manifold (not shown in the drawings) connected to the engine main body 1.

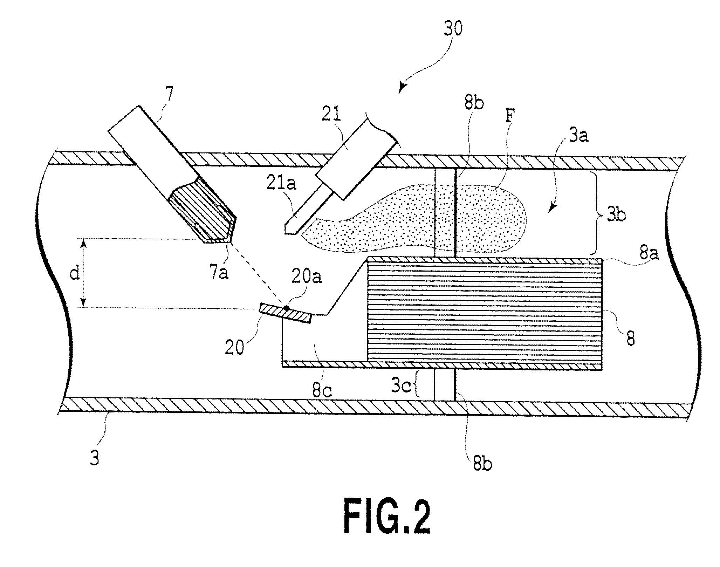

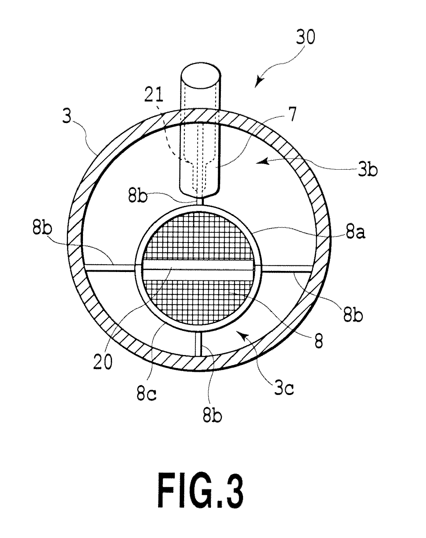

As shown in Fig. 2 and Fig. 3 in detail, the fuel addition valve 7 allows liquid fuel (light oil) to be added or injected into the exhaust. The fuel addition valve 7 includes a single injection hole 7a. The central axis of the injection hole 7a includes a component extending in a direction traversing the exhaust pipe 3 and is inclined toward the downstream of the exhaust pipe 3. A plurality of injection holes may be provided.

A pretreatment catalytic converter 8 is provided in the exhaust pipe 3 between the fuel addition valve 7 and the oxidation catalytic converter 6 to reform the fuel injected via the fuel addition valve 7. The pretreatment catalytic converter 8 may be constructed as an oxidation catalytic converter including, for example, a carrier formed of zeolite and carrying rhodium or the like.

When the fuel is supplied to the pretreatment catalytic converter 8, the fuel is oxidized in the pretreatment catalytic converter 8 if the pretreatment catalytic converter 8 has been activated. Then, oxidation reaction heat is generated to raise the temperature of the pretreatment catalytic converter 8. This enables an increase in the temperature of exhaust gas passing through the pretreatment catalytic converter 8.

Furthermore, the increased temperature of the pretreatment catalytic converter 8 decomposes hydrogen carbide contained in the fuel and having a large carbon number, into reactive hydrogen carbide having a small carbon number. Thereby the fuel is reformed to reactive fuel.

In other words, the pretreatment catalytic converter 8 forms a rapid heater that rapidly generates heat, on one hand, and forms a reformed fuel discharger that discharges reformed fuel, on the other hand. Furthermore, part or all of the fuel added via the fuel addition valve is ignited by the glow plug 21. This also promotes the increase in the temperature of the exhaust gas.

The pretreatment catalytic converter 8 has an outer diameter smaller than the inner diameter of the exhaust pipe 3. When the pretreatment catalytic converter 8 is placed in the exhaust pipe 3, exhaust can pass through a catalyst bypass 3a that is a gap between an outer peripheral surface of the pretreatment catalytic converter 8 and an inner peripheral surface of the exhaust pipe 3. The pretreatment catalytic converter 8 is of what is called a straight flow type in which individual cells extend from upstream to downstream. The pretreatment catalytic converter 8 is generally arranged in a cylindrical outer frame 8a supported in the exhaust pipe 3 by a plurality of generally radially arranged stays 8b. The pretreatment catalytic converter 8 is surrounded by the catalyst bypass 3a substantially all along the circumference of the pretreatment catalytic converter 8 except for portions of the pretreatment catalytic converter 8 to which the stays 8b are attached.

The exhaust pipe 3 is formed to be generally cylindrical. The axis of the pretreatment catalytic converter 8 in an exhaust flow direction is located lower in Fig. 3 than the axis of the exhaust pipe 3 in the exhaust flow direction. Thus, the catalyst bypass 3a forms a wider bypass 3b in the upper side of Fig. 3 and a narrower bypass 3c in the lower side of Fig. 3.

The glow plug 21 is installed such that a heating portion 21a thereof is positioned downstream of the fuel addition valve 7 and upstream of the pretreatment catalytic converter 8. The glow plug 21 is connected to an on-board DC power source via a booster circuit (not shown in the drawings) . When the glow plug 21 is energized, the heating portion 21a generates heat. The heat generated by the heating portion 21a enables the fuel added via the fuel addition valve 7 to be ignited to generate a flame F. The glow plug 21 has the axis thereof inclined toward the upstream side of the exhaust pipe 3. However, the glow plug 21 may be arranged in any posture, for example, orthogonally to the flow direction or parallel to a longitudinal direction of an impact plate 20 described below. Ignition means may be another apparatus such as a ceramic heater or a spark plug, particularly an electric apparatus or a spark ignition apparatus.

A lower portion of a front end of the outer frame 8a in which the pretreatment catalytic converter 8 is accommodated forms a gutter-like projecting portion 8c that projects toward the upstream side. The impact plate 20 formed of a flat plate is fixed to a tip (upstream end) and an upper end of the projecting portion 8c. The impact plate 20 is positioned lower than the axis of the exhaust pipe 3 and slightly inclined such that a downstream end of the impact plate 20 is positioned lower than an upstream end of the impact plate 20.

The impact plate 20 can be formed of a material such as SUS which is excellent in heat resistance and impact resistance. The fuel addition valve 7 allows fuel to be injected obliquely rearward and downward toward the impact plate 20. The central axis of the injection hole 7a in the fuel injection valve 7 is directed toward a center 20a of a top surface of the impact plate 20. The trajectory of the fuel supplied via the fuel addition valve 7 includes a component traveling in a direction traversing the exhaust pipe 3. The impact plate 20 promotes atomization of the fuel when the fuel collides against the impact plate 20, thus improving dispersability and diffusibility of the fuel. The fuel having collided against the impact plate 20 is biased toward the downstream side by an exhaust flow. The fuel having collided against the impact plate 20 is supplied to the pretreatment catalytic converter 8 and the heating portion 21a of the glow plug 21.

The heating portion 21a of the glow plug 21 is arranged in the vicinity of the pretreatment catalytic converter 8, and above and slightly upstream of a front end surface of the pretreatment catalytic converter 8. This enables the heating portion 21a to exchange heat with the pretreatment catalytic converter 8. That is, the glow plug 21 is positioned such that an elevated temperature of the pretreatment catalytic converter 8 raises the temperature of the vicinity of the heating portion 21a as a result of thermal radiation and convection, promoting the ignition of the fuel supplied via the fuel addition valve 7. However, the position, in the flow direction, of the heating portion 21a of the glow plug 21 may be the same as or downstream of the position of the front end position of the pretreatment catalytic converter 8.

As shown in Fig. 1, the engine main body 1 is accompanied by an electronic control unit (hereinafter referred to as an ECU) 10 configured to control various devices according to the operating state of the engine main body 1 or a driver's request. The ECU 10 includes a CPU that performs various arithmetic operations regarding engine control, a ROM that stores programs and data required for the engine control, a RAM that temporarily stores the results of arithmetic operations of the CPU, and an input port and an output port which outputs and receives signals to and from an external apparatus.

Besides the above-described airflow meter 4, various sensors are connected to the ECU 10 via electric wires; the sensors include a crank angle sensor 24 that detects the crank angle of the engine main body 1 and an accelerator opening sensor 25 that outputs an electric signal according to the opening of an accelerator. These output signals are input to the ECU 10. Furthermore, various devices including the intra-cylindrical fuel injection valves 9, the fuel addition valve 7, and the glow plug 21 are connected to the ECU 10 via electric wires and controlled by the ECU 10. The ECU 10 can detect the amount of intake air based on an output value from the airflow meter 4, detect the number of engine rotations based on an output from the crank angle sensor 24, and detect a demand load on the engine main body 1 based on an output value from the accelerator opening sensor 25.

According to the present embodiment, when temperature elevation is controlled using the burner apparatus 30, the ECU 10 controls the fuel addition valve 7 and the flow plug 21. That is, the ECU 10 drives the fuel addition valve 7 open (turns the fuel addition valve 7 on) as necessary to inject fuel via the fuel addition valve 7 as necessary. Furthermore, the ECU 10 energizes the glow plug 21 as necessary to set the glow plug 21 at a sufficiently high temperature. The injected fuel is ignited and combusted by the glow plug 21, generating a flame F and thus hot heated gas. The heated gas is supplied to the oxidation catalytic converter 6 and the NOx catalytic converter 26. Furthermore, the flame F and the heated gas can be utilized to combust reformed fuel discharged from an outlet of the pretreatment catalytic converter 8.

According to the present embodiment, the temperature elevation control using the burner apparatus is carried out (or the burner apparatus 30 is actuated) in a predetermined operating region of the engine, for example, a low and medium speed rotation area (for example, a region with at most 40% of the maximum number of rotations) and a low and medium load area (for example, a region with at most 40% of the maximum demand load) . Whether or not the actual operating state of the engine is in the predetermined operating region is determined by comparing the number of engine rotations detected using the crank angle sensor 24 and the demand load detected using the accelerator opening sensor 25 with the respective threshold values.

As described above, an increase in the amount of intake air tends to degrade the ignition performance and combustion performance of the burner apparatus. The reason is as follows.

An increased amount of intake air increases the flow rate and flow velocity of exhaust gas supplied to the burner apparatus 30. Then, added fuel is swept away to the downstream side before being retained around the heating portion 21a of the glow plug 21, precluding ignition itself from being properly carried out (the burner apparatus is brought into a misfiring state) . In another case, even if the fuel is ignited, the flame F may be blown out by exhaust gas immediately after the ignition and thus prevented from being sufficiently maintained. An increased amount of intake air lowers the temperature of exhaust gas supplied to the burner apparatus 30, thus hindering vaporization of the added fuel. This makes the abode-described problem more serious.

In particular, according to the present embodiment, the above-described problem tends to occur in a high rotation and low load side of the predetermined operating region in which the temperature elevation control is performed.

Thus, to cope with this, the present embodiment takes the following measures. When the amount of intake air detected by the airflow meter 4 serving as detection means and the ECU 10 exceeds a predetermined threshold value, the amount of fuel added via the fuel addition valve 7 per unit time (hereinafter referred to as the amount of fuel added per unit time) is increased beyond a predetermined reference amount.

An increase in the amount of fuel added per unit time allows the added fuel to remain stagnant around the heating portion 21a of the glow plug 21 for a longer duration. This increases the probability of successful ignition to allow the ignition itself to be properly achieved (misfiring can be prevented or suppressed) . In another case, if the ignition is achieved, the flame F can be prevented or restrained from being blown out immediately after the ignition by the additional fuel, and can thus be sufficiently maintained. The ignition and combustion are improved as described above, and thus the adverse effect of lowered exhaust gas temperature can be significantly reduced. Hence, even with an increased amount of intake air, the burner apparatus 30 can demonstrate sufficient ignition performance and sufficient combustion performance.

According to the present embodiment, the ECU 10 intermittently drives the fuel addition valve 7 open to intermittently add fuel via the fuel addition valve 7. When the amount of intake air exceeds a predetermined threshold value, the ECU 10 carries out set driving involving a set of a plurality of valve open drive operations, and sets the drive duration for the Nth (N is an integer of at least one) valve open drive operation in the set longer than a predetermined reference duration.

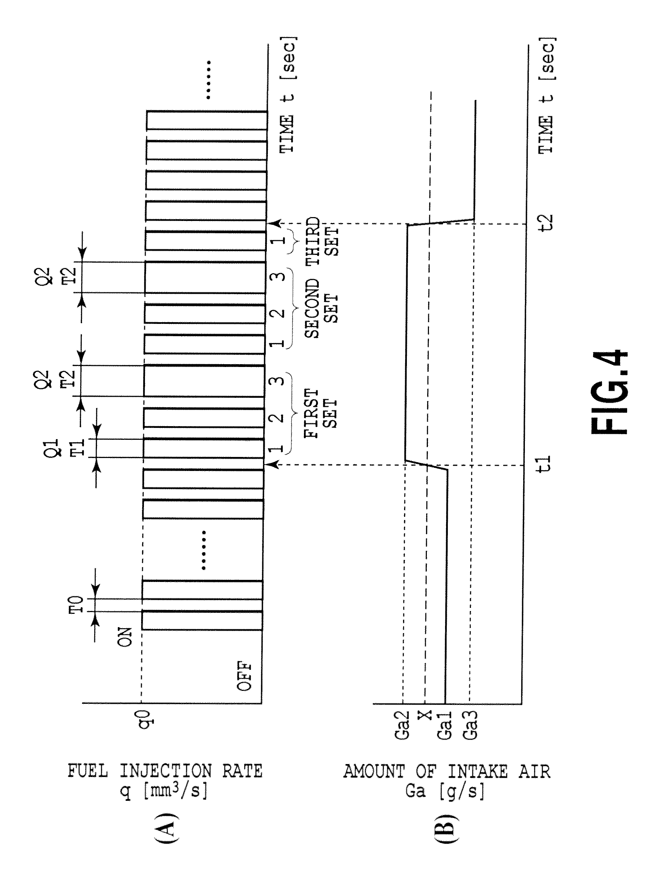

Now, this will be described. Fig. 4 shows a first example of control of the fuel addition valve 7. Fig. 4 (A) shows changes in the drive state of the fuel addition valve 7, and Fig. 4(B) shows changes in the amount of intake air.

As shown in Fig. 4 (A), the ECU 10 transmits a periodic pulse signal to the fuel addition valve 7 to intermittently drive the fuel addition valve 7 open. When the ECU 10 turns the fuel addition valve 7 on, the fuel addition valve 7 is driven open to add fuel. When the ECU 10 turns the fuel addition valve 7 off, the fuel addition valve 7 is closed to stop the addition of the fuel.

As shown in Fig. 4(B), in the illustrated example, the amount of intake air Ga increases from Ga1, exceeds a single threshold value X, reaches Ga2, then decreases beyond the threshold value X, and reaches Ga3 (Ga3 < Ga1 < X < Ga2). During a period between t1 and t2 when the threshold value X is exceeded, set driving involving a set of three valve open drive operations is carried out, and a drive duration T2 for the third (that is, N = 3) valve open drive operation in this set is set longer than a predetermined reference duration T1.

More specifically, a drive scheme (hereinafter referred to as a reference scheme) of alternately repeating keeping the fuel addition valve 7 open for a reference duration T1 and keeping the fuel addition valve 7 closed for a predetermined duration T0 is adopted before the amount of intake air Ga exceeds the threshold value X (before t1) and after the amount of intake air Ga becomes equal to or smaller than the threshold value X (at and after t2). A fuel injection rate q (mm³/s) measured while the fuel addition valve 7 is kept open has a constant value q0, and the duration when the fuel addition valve 7 is kept closed has a constant value T0. A single operation of keeping the fuel addition valve 7 open for the reference duration T1 allows the addition of fuel the amount of which is Q1 = q0 x T1. The amount of fuel added during each cycle including the close duration T0 (the cycle = T1 + T0) is also Q1. Hence, the amount of fuel added per unit time is R1 = Q1 / (T1 + T0) = 3 x Q1 / {3 x (T1 + T0)} (mm³/s). This amount is referred to as a reference amount. Here, it should be noted that the fuel injection rate q uses the same unit as that for the amount of fuel added per unit time but is indicative of a different type of value.

In contrast, during a period when the amount of intake air Ga exceeds the threshold value X (between t1 and t2), the above-described set driving is carried out. In the set driving, an operation of keeping the fuel addition valve 7 open for the reference duration T1 and an operation of keeping the fuel addition valve 7 closed for the duration T0 are alternately performed twice, and then during the third valve open duration, the fuel addition valve 7 is kept open for a duration T2 that is longer than the reference duration T1. After the fuel addition valve 7 is kept open for the duration T2, the fuel addition valve 7 is kept closed for the duration T0, thus completing one set. The fuel injection rate q measured while the fuel addition valve 7 is kept open has the same constant value q0 as that in the case of the reference scheme. The amount Q2 of fuel added during the third valve open duration is equal to q0 x T2.

In the illustrated example, after time t1, set driving for the first set and the second set is carried out. Then, during the third set, at time t2 during the duration when the fuel addition valve 7 is kept closed, the amount Ga starts to deviate from the condition Ga > X. Thus, the set driving is ended and switched back to the reference scheme.

The period of one set is equal to 2 x T1 + T2 + 3 x T0. Furthermore, the amount of fuel added during the period of one set is equal to 2 x Q1 + Q2. Hence, the amount R2 of fuel added per unit time is equal to (2 x Q1 + Q2) / (2 x T1 + T2 + 3 x T0) (mm³/s). It will be appreciated that since Q1 < Q2, the amount R2 of fuel added per unit time is greater than the amount R1 of fuel added per unit time when the amount of intake air Ga does not exceed the threshold value X.

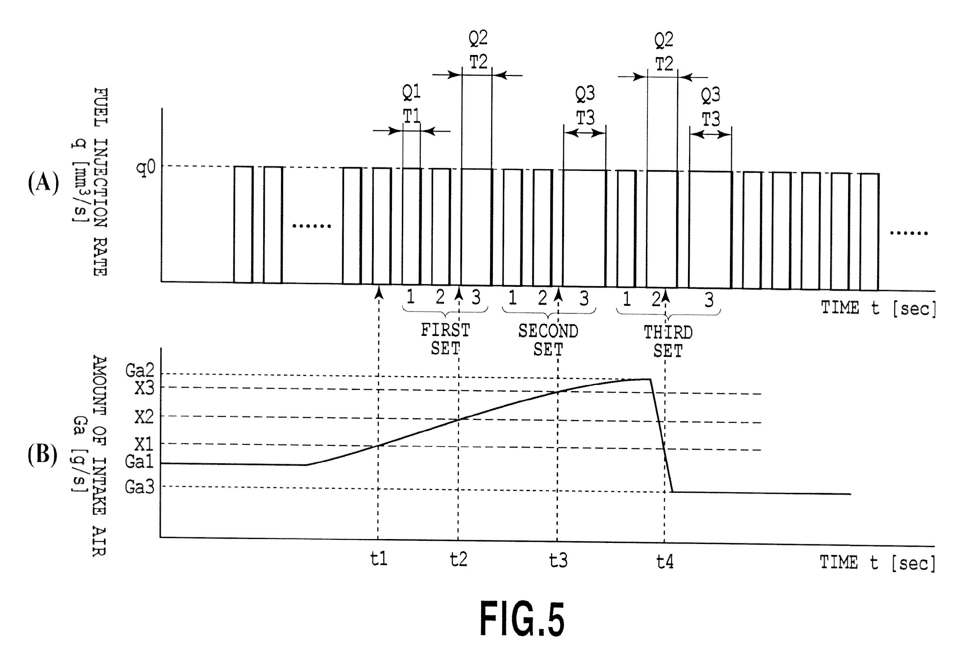

Fig. 5 shows a second example of control of the fuel addition valve 7. As is the case with the first example, Fig. 5(A) shows changes in the drive state of the fuel addition valve 7, and Fig. 5(B) shows changes in the amount of intake air.

As shown in Fig. 5(B), in this case, a plurality threshold values, specifically three threshold values X1, X2, and X3, are preset for the amount of intake air; the threshold value increases step by step, and X1 < X2 < X3.

In the illustrated example, the amount of intake air Ga increases, sequentially exceeds X1, X2, and X3, and reaches Ga2. The amount of intake air Ga then decreases below the three threshold values X1, X2, and X3, and reaches Ga3 (Ga3 <Ga1 <X1 < X2 <X3 < Ga2).

Then, as shown in Fig. 5(A), every time the amount of intake air Ga increases beyond each of the three threshold values X1, X2, and X3, the total drive time for one set increases gradually.

More specifically, in response to the amount of intake air Ga exceeding the smallest, first threshold value X1 at time t1, the drive scheme is switched from the reference scheme to the set driving involving a set of three valve open drive operations. For the first set, as is the case with the reference scheme, the drive duration T2 for the third (that is, N = 3) valve open drive operation is set longer than the reference duration T1. In the illustrated example, while the fuel addition valve 7 is kept open for the reference duration T1 according to the reference scheme, the condition Ga > X1 is met. Then, this valve open operation is completed, and after the duration T0 when the fuel addition valve 7 is kept closed elapses, the first set driving is started.

During the first set driving, at time t2, which is almost the same as the time when the third valve open duration is started, the amount of intake air Ga exceeds the second threshold value X2, which is the second smallest threshold value. Then, in response, simultaneously with the end of the first set, the second set is started. For the second set, the drive duration T3 for the third (that is, N = 3) valve open drive operation is set longer than the drive duration T2, which is longer than the reference duration T1 (T2 < T3). The amount Q3 of fuel added during the third valve open duration in the second set is equal to q0 x T3.

Thus, when the amount of intake air Ga exceeds the second threshold value X2, the drive duration for the third valve open drive operation is extended from T2 to T3.

During the second set driving, at time t3, immediately before the start of the third valve open duration, the amount of intake air Ga exceeds the third smallest threshold value X3. Then, in response, simultaneously with the end of the second set, the third set is started. For the third set driving, in addition to the drive duration for the third valve open drive operation, the drive duration T2 for the Mth (in the present embodiment, M = 2) valve open drive operation that is different from the third valve open drive operation is set longer than the reference duration T1.

The drive duration for the third valve open drive operation is T3 as is the case with the second set. On the other hand, the drive duration for the second valve open drive operation is T2, equal to the third valve open drive operation in the first set.

As described above, the drive duration T3 for the third valve open drive operation is different from the drive duration T2 for the second valve open drive operation. Furthermore, one of the drive durations is longer than the other, and according to the present embodiment, the drive duration. T3 is set longer than the drive duration T2.

During the third set driving, at time t4 during the second valve open duration, the amount of intake air Ga becomes equal to or smaller than the smallest, first threshold value X1. Then, in response, simultaneously with the end of the third set, the drive scheme is switched back to the reference scheme.

According to the reference scheme, which is carried out before the amount of intake air Ga exceeds the first threshold value X1 and after the amount of intake air Ga becomes equal to or smaller than the first threshold value X1, the amount of fuel added per unit time is a reference amount R1 = Q1 / (T1 + T0) = 3 x Q1 / {3 x (T1 + T0)} (mm³/s).

In contrast, during the first set driving, which is carried out in response to the amount of intake air Ga exceeding the first threshold value X1, the amount R2 of fuel added per unit time is equal to (2 x Q1 + Q2) / (2 x T1 + T2 + 3 X T0) (mm³/s) It will be appreciated that since Q1 < Q2, the amount R2 of fuel added per unit time is greater than the reference amount R1 of fuel added per unit time. Furthermore, the total drive time ΣT2 for the first set is equal to 2 x T1 + T2.

During the second set driving, which is carried out in response to the amount of intake air Ga exceeding the second threshold value X2, the amount R3 of fuel added per unit time is equal to (2 x Q1 + Q3) / (2 x T1 + T3 + 3 X T0) (mm³/s). It will be appreciated that since Q2 < Q3, the amount R3 of fuel added per unit time is greater than the amount R2 of fuel added per unit time for the fist set. Furthermore, the total drive time ΣT3 for the second set is equal to 2 x T1 + T3, which is longer than the total drive time ΣT2 for the first set.

During the third set driving, which is carried out in response to the amount of intake air Ga exceeding the third threshold value X3, the amount R4 of fuel added per unit time is equal to (Q1 + Q2 + Q3) / (T1 + T2 + T3 + 3 x T0) (mm³/s). It will be appreciated that the amount R4 of fuel added per unit time is greater than the amount R3 of fuel added per unit time for the second set. Furthermore, the total drive time ΣT4 for the third set is equal to T1 + T2 + T3, which is longer than the total drive time ∑T3 for the second set.

As described above, every time the amount of intake air Ga increases beyond each of the plurality of threshold values X1, X2, and X3, the amount of fuel added per unit time is gradually increased, and the total drive time for one set is gradually increased. Although an increase in the amount of intake air Ga tends to gradually degrade the ignition performance and combustion performance of the burner apparatus 30, the above-described operation enables sufficient ignition performance and sufficient combustion performance to be stably demonstrated. Furthermore, an appropriate amount of fuel for the value of the amount of intake air Ga can be added, that is, fuel can be added without excess or deficiency. Thus, possible smoking and increased fuel consumption caused by excess fuel can also be prevented.

In particular, the method of intermittently adding fuel according to the present invention may interrupt the fuel supply while the fuel addition valve 7 is kept closed, resulting in unsuccessful ignition or combustion. However, the adoption of the above-described drive scheme enables a significant reduction in the probability of unsuccessful ignition and combustion, improving the ignition performance and the combustion performance.

Fig. 5 shows an example in which the amount of intake air Ga plunges from Ga2 to Ga3. However, if the decrease is slow, every time the amount of intake air Ga becomes equal to or smaller than each of the plurality of threshold values X1, X2, and X3, the amount of fuel added per unit time is gradually reduced, and the total drive time for one set is gradually shortened. For example, if during the execution of the third set driving, the amount of intake air Ga becomes equal to or smaller than the third threshold value X3 and is maintained between the third threshold value X3 and the second threshold value X2, then during the fourth set (and subsequent sets) following the third set, valve open drive control similar to that for the second set is performed.

The preferred embodiment of the present invention has been described in detail. However, various other embodiments of the present invention are possible. For example, the application and form of the internal combustion engine are optional and are not limited to the on-board or vehicle use. The above-described numerical values are also illustrative and may be changed as necessary.

In regard to the set driving, the number of valve open drive operations performed during one set may vary; two or four such operations may be performed during one set. Furthermore, the first or second valve open drive operation in one set may have an extended drive duration, and the value of N is not limited to three. Similarly, if in addition to the Nth valve open drive operation, the Mth valve open drive operation has an extended drive duration, the value of M is also not limited to two.

If a plurality of threshold values are provided, the number of the threshold values is not limited to three. The number of drive operations per set may be varied every time the threshold value is exceeded or depending on the set. In the example shown in Fig. 5, the same, third valve open drive operation has an extended drive duration for the first and second sets. However, the valve open drive operation with an extended drive duration may vary depending on the set. For example, for the first set, the second valve open drive operation may have an extended drive duration, and for the second set, the third valve open drive operation may have an extended drive duration.

In the example shown in Fig. 5, for the second set, only the third valve open drive operation has an extended drive duration, and for the third set, the second and third valve open drive operations have an extended drive duration. However, the present invention is not limited to this configuration. For example, for both the second and third sets, only the Nth valve open drive operation may have an extended drive duration or both the Nth and Mth valve open drive operations may have an extended drive duration.

As described above, many variations, applications, and combinations may be made to the set driving. Furthermore, a method other than the set driving may be used to increase the amount of fuel added per unit time. For example, the reference scheme may also be used when the amount of intake air exceeds the threshold value, and every valve open drive operation may have an extended drive duration.

In regard to the burner apparatus, at least one of the pretreatment catalytic converter and the exhaust pipe may have a noncircular cross section such as an elliptic or oval cross section. Exhaust treatment apparatuses located downstream of the pretreatment catalytic converter may be of any type and may be arranged in any order.

The present invention has been specifically described to some degree. However, it should be appreciated that various alterations and changes may be made to the claimed invention without departing from the spirit and scope thereof. The embodiments of the present invention are not limited to those described above, and the present invention includes any variations and applications embraced in the concept of the present invention specified by the claims. Thus, the present invention should not be interpreted in a limited manner but is applicable to any other techniques belonging to the scope of the concepts of the present invention. The means for solving the problems according to the present invention may be combined together wherever possible.

## Claims

1. An internal combustion engine **characterized by** comprising:
an exhaust treatment apparatus provided in an exhaust passage;
a burner apparatus provided upstream of the exhaust treatment apparatus to increase an exhaust temperature and comprising at least a fuel addition valve that allows fuel to be added into exhaust and ignition means for igniting the fuel added via the fuel addition valve;
detection means for detecting an amount of intake air in the internal combustion engine; and
control means for driving the fuel addition valve open when fuel is added via the fuel addition valve, the control means increasing an amount of fuel added via the fuel addition valve per unit time beyond a predetermined reference amount when the amount of intake air detected by the detection means exceeds a predetermined threshold value.

2. The internal combustion engine according to Claim 1, **characterized in that** the control means intermittently drives the fuel addition valve open to intermittently add fuel via the fuel addition valve, and when the amount of intake air exceeds the threshold value, the control means carries out set driving comprising a set of a plurality of valve open drive operations, and sets a drive duration for an Nth (N is an integer of at least one) valve open drive operation in the set longer than a predetermined reference duration.

3. The internal combustion engine according to Claim 2, **characterized in that** the threshold value comprises a plurality of threshold values that increase step by step, and
the control means gradually increases a total drive duration for one set every time the amount of intake air increases beyond each of the plurality of threshold values.

4. The internal combustion engine according to Claim 3, **characterized in that** the control means increases the drive duration for the Nth valve, open drive operation when the amount of intake air exceeds at least one of the plurality of threshold values.

5. The internal combustion engine according to Claim 3, **characterized in that** the control means increases the drive duration not only for the Nth valve open drive operation in the set but also for an Mth (M is an integer of at least one) valve open drive operation in the set which is different from the Nth valve open drive operation when the amount of intake air exceeds at least one of the plurality of threshold values.

6. The internal combustion engine according to Claim 5, **characterized in that** the control means makes the drive duration for the Nth valve open drive operation be different from the drive duration for the Mth valve open drive operation.

7. The internal combustion engine according to any one of Claims 1 to 6, **characterized in that** the burner apparatus further comprises a pretreatment catalytic converter that oxidizes the fuel added via the fuel addition valve.
